# EUROPÄISCHE PATENTSCHRIFT

(11) **EP 2 618 990 B1**
(45) Veröffentlichungstag und Bekanntmachung des Hinweises auf die Patenterteilung: **26.08.2015**
(21) Anmeldenummer: 11767399.6
(22) Anmeldetag: 22.09.2011
(51) Int. Cl.: B29C 67/04, B22F 3/105, B29C 67/00

(54) **VERFAHREN ZUM SELEKTIVEN LASERSINTERN UND ANLAGE ZUM SELEKTIVEN LASERSINTERN**
METHOD FOR SELECTIVE LASER SINTERING AND SYSTEM FOR SELECTIVE LASER SINTERING
PROCÉDÉ DE FRITTAGE LASER SÉLECTIF ET INSTALLATION DE FRITTAGE LASER SÉLECTIF

(30) Priorität: 23.09.2010 DE 102010041284
(43) Veröffentlichungstag der Anmeldung: 31.07.2013
(73) Patentinhaber: Siemens Aktiengesellschaft, 80333 München (DE)
(72) Erfinder: HOFACKER, Oliver, 14199 Berlin (DE); SCHÄFER, Martin, 10557 Berlin (DE)
(86) Internationale Anmeldenummer: PCT/EP2011/066516
(87) Internationale Veröffentlichungsnummer: WO 2012/038507

(56) Entgegenhaltungen:
- EP-A1- 2 286 982
- DE-A1- 10 112 591
- DE-A1- 10 235 434
- DE-B3-102007 057 130
- DE-C1- 19 649 865

## Beschreibung

Die Erfindung betrifft Verfahren zum selektiven Lasersintern, bei dem ein Werkstück lagenweise durch Bestrahlung eines aus dem Material des Werkstücks bestehenden Pulverbettes durch mindestens einen linienförmigen Energieeintrag eines Laserstrahls hergestellt wird. Außerdem betrifft die Erfindung eine Anlage zum selektiven Lasersintern mit einer Prozesskammer, in der ein Träger für ein herzustellendes Werkstück und ein Pulververteiler zur Erzeugung eines Pulverbettes auf dem Träger vorgesehen sind.

Ein Verfahren der eingangs angegebenen Art ist beispielsweise aus der DE 10 2006 059 851 B4 bekannt. Bei dem beschriebenen Verfahren zum selektiven Lasersintern wird ein Werkstück dadurch hergestellt, dass die einzelnen Lagen des Pulverbettes durch mehrere linienförmige Energieeinträge eines Laserstrahls aufgeschmolzen werden. Die linienförmigen Energieeinträge sind dabei geradlinig und erstrecken sich jeweils nur über Einzelabschnitte der herzustellenden Fläche einer Lage, welche einen Teilausschnitt der Gesamtfläche abdecken. Dabei werden die einzelnen Energieeinträge mit der Maßgabe untereinander kombiniert, dass abwechselnd in jedem Teilabschnitt jeweils nur ein linienförmiger Energieeintrag erfolgt, so dass dieser Einzelabschnitt jeweils bis zum nächsten Energieeintrag abkühlen kann. Das Ziel ist eine spannungsärmere Gefügestruktur des hergestellten Bauteils.

Die linienförmigen Energieeinträge benachbarter Teilabschnitte der Fläche werden bevorzugt im rechten Winkel zueinander ausgerichtet. Hierbei ist es unumgänglich, dass die linienförmigen Energieeinträge jeweils an den die Kontur bildenden Enden der herzustellenden Querschnittsfläche im Pulverbett enden. Hierbei entsteht in der Kontur prozessbedingt eine gewisse Oberflächenrauhigkeit, die durch die Breite des Schmelzbades des selektiven Pulverschmelzens vorgegeben ist. Daraus folgt, dass die erreichbare Oberflächengüte des betreffenden selektiven Lasersinterns verfahrensbedingt begrenzt ist. Soll bei vorgegebenen Parametern für das selektive Lasersintern eine bessere Oberflächengüte erzeugt werden, so kann dies nur durch eine Nachbearbeitung der Oberflächen erreicht werden.

Eine Anlage zum selektiven Lasersintern ist gemäß der DE 10 2007 036 370 B3 bekannt. Diese Anlage weist in einer Kammer einen Träger für ein Werkstück auf. Dieser zeichnet sich insbesondere dadurch aus, dass er mit einer Ausnehmung versehen ist, so dass ein vorgefertigtes Werkstück dort eingesetzt werden kann. Mit dem aus dieser Ausnehmung herausragenden Teil kann das Werkstück dann einer Behandlung durch selektives Lasersintern in der Anlage ausgesetzt werden. Hierzu wird auf dem Träger das Pulver aufgetragen, aus dem das Werkstück gefertigt werden soll. Zum Einsatz kommt ein Pulververteiler, der aus einer Dosierungsvorrichtung und einer Rakel besteht, wobei mit diesen Einrichtungen eine ebene Oberfläche es Pulverbettes erzeugt werden kann. In diese Oberfläche schreibt der Laser sozusagen den Querschnitt des herzustellenden Werkstückes in der betreffenden Lage, so dass schichtweise das Werkstück vollendet wird.

Gemäß der EP 1 419 836 A1 ist es bekannt, dass zur Vergleichmäßigung der durch das Lasersintern erzeugten Struktur der Laser in den aufeinanderfolgenden erzeugten Schichten kreuzweise geführt werden kann. Um die Struktur im Randbereich des erzeugten Bauteils zu verbessern, kann gemäß der US 5,155,324 vorgesehen werden, dass die Kontur in der jeweils erzeugten Schicht des Bauteils mit dem Laser nachgefahren wird. Speziell für ringförmige erzeugte Querschnitte des Bauteils kann gemäß der DE 101 12 591 A1 vorgesehen werden, dass der Laser spiralförmig beispielsweise von der Außenkontur zur Innenkontur geführt wird. Gemäß der DE 10 2006 059 851 B4 wird außerdem vorgeschlagen, dass zur Verbesserung des Ergebnisses die zu erzeugende Querschnittsfläche eines Bauteils gedanklich in unterschiedliche Regionen aufgeteilt werden kann, wobei abwechselnd immer Teile des Querschnitts in unterschiedlichen Regionen hergestellt werden, so dass am Ende der vollständige Querschnitt aufgeschmolzen ist.

Gemäß der DE 102 35 434 A1 wird eine Maschine für generative Fertigungsverfahren vorgestellt, bei der die Bauplattform, auf der das Pulver schichtweise aufgetragen wird, beweglich angeordnet ist. Diese lässt sich insbesondere um eine Drehachse drehen und dabei je nach erzeugter Schicht anheben oder absenken.

Gemäß der DE 10 2008 056 336 A1 ist außerdem beschrieben, dass generative Fertigungsverfahren unter anderem auch als Reparaturverfahren für Turbinenschaufeln Verwendung finden können.

Gemäß der DE 10 2007 057 130 B3 ist eine Vorrichtung zum Rakeln beschrieben, bei der die Rakel eine in sich geschlossene Form aufweist. Mit dieser Rakel können Pulverbetten zum additiven Herstellen von Bauteilen vorbereitet werden. Die Rakel ist über den Bauraum für den herzustellenden Körper bewegbar, wobei sowohl eine Geradführung der Rakel sowie eine Rotation der Rakel ermöglicht wird, wodurch der zur Verfügung stehende Bauraum für die Rakel erreichbar ist.

Gemäß der DE 196 49 865 C1 wird beschrieben, wie Bauteile mit ringförmigem Querschnitt durch selektives Lasersintern hergestellt werden können. Hierbei kann das Werkstück des durch die Oberfläche des Pulverbetts definierten Querschnitts eine gekrümmte Kontur aufweisen und der Laserstrahl verwendet werden, damit während eines ersten linienförmigen Energieeintrags die Kontur der gerade herzustellenden Lage ausgebildet wird.

Schließlich lässt sich der EP 2 286 982 A1, die nach dem Prioritätstag dieser Anmeldung veröffentlicht wurde, entnehmen, dass ein Pulververteiler auch an einer Haltestange in der Prozesskammer einer Anlage zum Laserschmelzen befestigt werden kann. Die Haltestange ist in einer Ecke der Prozesskammer drehbar gelagert, so dass der Pulververteiler in der Prozesskammer ungefähr einen Viertelkreis beschreiben kann, wenn er sich bewegt. Dabei überstreicht er auch das Pulverbett, so dass dort eine Pulverschicht abgelegt werden kann.

Die Aufgabe der Erfindung liegt darin, ein Verfahren zum selektiven Lasersintern bzw. eine Anlage zum selektiven Lasersintern anzugeben, mit dem bzw. mit der bei der Herstellung der Werkstücke eine vergleichsweise gute Oberflächengüte des Werkstücks erreicht werden kann und insbesondere eine Nachbearbeitung des Werkstücks vermieden werden kann.

Diese Aufgabe mit einem Verfahren nach Anspruch 1 dadurch gelöst, dass das Werkstück im durch die Oberfläche des Pulverbettes definierten Querschnitt zumindest teilweise eine gekrümmte Kontur aufweist und der Laserstrahl zumindest während des ersten linienförmigen Energieeintrags der gekrümmten Kontur folgend derart geführt wird, dass die Kontur durch das gesinterte Material stufenlos nachgebildet wird. Als linienförmiger Energieeintrag im Sinne den Erfindung soll das Überstreichen des Laserstrahls eines bestimmten linienförmigen Abschnitts des herzustellenden Querschnitts des Werkstücks verstanden werden. Ein linienförmiger Energieeintrag besteht also aus dem Ausrichten des Lasers auf den Anfangspunkt dieses linienförmigen Energieeintrags, dem Führen des Laserstrahls entlang der gedachten Linie des linienförmigen Energieeintrags und dem Abschalten des Lasers, wenn das Ende dieser gedachten Linie erreicht wird. Erfindungsgemäß ist vorgesehen, dass wenigstens ein erster linienförmiger Energieeintrag so ausgestaltet ist, dass die gedachte Linie, der der Laserstrahl folgt, der gekrümmten Kontur des Werkstücks folgt. Hierbei ist ein Abstand zur eigentlichen Kontur des Querschnitts erforderlich, der durch die Ausdehnung des durch den Laserstrahl erzeugten Schmelzbades in der Oberfläche des Pulvers definiert ist. Somit wird nämlich sichergestellt, dass die Kontur selbst durch den Rand des Schmelzbades gebildet wird und so erfindungsgemäß auch eine stufenlose Nachbildung der Kontur ermöglicht wird. Dies hat den Vorteil, dass die oben erwähnte Stufigkeit aufgrund des durch das Lasersintern erreichbaren Rastermaßes zumindest im Bereich der gekrümmten Kontur vermieden wird, wodurch die Oberflächengüte des hergestellten Bauteiles verbessert wird. Eine Nachbearbeitung kann dann vorteilhaft entfallen.

Ist im Rahmen dieser Erfindung von einem ersten linienförmigen Energieeintrag die Rede, so ist damit mindestens einer der linienförmigen Energieeinträge gemeint, die zur Herstellung des betreffenden Querschnitts des Werkstückes erforderlich sind. Dieser erste linienförmige Energieeintrag muss nicht der zeitlich erste Energieeintrag dieses Verfahrensschrittes zur Herstellung des Querschnittes des Bauteils sein. Vielmehr ist damit gemeint, dass zumindest der eine (erste) linienförmige Energieeintrag er gekrümmten Kontur folgend ausgestaltet ist, was nicht ausschließt, dass auch weitere (ein zweiter, ein dritter usw.) Energieeinträge in der erfindungsgemäßen Weise an der gekrümmten Kontur ausgerichtet sind.

Erfindungsgemäß ist außerdem vorgesehen, dass das Werkstück einen durch die Oberfläche definierten, ringförmig geschlossenen Querschnitt, insbesondere einen kreisringförmigen Querschnitt, aufweist. Werkstücke mit ringförmig geschlossenen Querschnitten können beispielsweise Gehäusestrukturen sein. Diese werden lagenweise hergestellt, wobei sich in dem Bereich, wo die Lagen sozusagen die senkrechte Gehäusewand schneiden, ringförmige Querschnitte ergeben. Einen kreisringförmigen Querschnitt würde beispielsweise ein Rohr aufweisen, welches mit einer senkrecht stehenden Symmetrieachse hergestellt wird. Die Herstellung von Werkstücken, deren durch das Pulverbett definierte Querschnitte ringförmig geschlossen sind, ist besonders vorteilhaft, da bei derartigen Querschnitten gewöhnlich große Bereiche mit einer gekrümmten Kontur auftreten, die sich vorteilhaft erfindungsgemäß mit hoher Oberflächengüte herstellen lassen.

Besonders vorteilhaft ist es daher auch, wenn das Werkstück ein Brenner ist, bei dem die Brenneröffnung hergestellt oder repariert wird. Brenner, wie sie beispielsweise in Gasturbinen zum Einsatz kommen, sind einer hohen thermischen Beanspruchung ausgesetzt. Insbesondere die Brenneröffnungen, in deren Bereich die Flamme des Brenners entsteht, limitieren daher die Lebensdauer des gesamten Brenners. Daher ist es von besonderem Vorteil, wenn dieser Bereich durch das erfindungsgemäße Verfahren zum selektiven Lasersintern repariert werden kann. Zu diesem Zweck wird eine schadhafte Stelle am Rande der Brenneröffnung entfernt oder sogar der gesamte die Brenneröffnung bildende Ring entfernt. Anschließend wird dieser auf den restlichen Brenner durch das selektive Lasersintern wieder aufgebaut. Hierbei ist die erfindungsgemäß zu erzeugende hohe Oberflächengüte von Vorteil, da die im Vergleich zu herkömmlichen Lasersinterverfahren mit erhöhter Oberflächengüte hergestellte Brenneröffnung weniger anfällig gegenüber einer Rissbildung aufgrund thermischer Beanspruchungen ist.

Im Übrigen zeichnet die Erfindung aus, dass durch den ersten linienförmigen Energieeintrag nur ein erster Teilabschnitt der gekrümmten Kontur ausgebildet wird und an diesen Teilabschnitt angrenzende Teilabschnitte der gekrümmten Kontur durch weitere linienförmige Energieeinträge erst dann ausgebildet werden, wenn das Material des ersten Teilabschnittes unter eine geforderte Temperatur abgekühlt ist. Für den ersten Teilabschnitt gilt das zum ersten linienförmigen Energieeintrag Angeführte entsprechend, d. h. dass der erste Teilabschnitt nicht derjenige sein muss, der in der zeitlichen Folge der Bestrahlung der Teilabschnitte als erstes bestrahlt wird, sondern dass dieser nur vor den im Anspruch genannten weiteren linienförmigen Energieeinträgen bestrahlt wird. Dies bedeutet jedoch nicht, dass auch vor dem ersten Teilabschnitt bereits weitere Teilabschnitte bestrahlt worden sein können. Die Unterteilung der gekrümmten Kontur in mehrere Teilabschnitte und die Herstellung in auf die Teilabschnitte abgestimmten, kurzen linienförmigen Energieeinträgen hat den Vorteil, dass eine lokale Erwärmung des Bauteils durch den Energieeintrag des Laserstrahls in Grenzen gehalten werden kann. Außerdem wird eine weitere Behandlung immer erst dann durchgeführt, wenn die geforderte Temperatur des betreffenden, bereits hergestellten Teilabschnittes erreicht ist. Die geforderte Temperatur ergibt sich aus der Ausbildung von Eigenspannungen im Gefüge, die dadurch zustande kommen, dass das Bauteil während der Herstellung der betreffenden Lage immer nur lokal erwärmt wird. Insgesamt lässt sich daher mit dieser Ausgestaltung des Verfahrens ein Bauteil erzeugen, in dem geringere Eigenspannungen im Gefüge vorliegen.

Gemäß einer anderen Ausgestaltung der Erfindung ist vorgesehen, dass weitere linienförmige Energieeinträge vorgenommen werden, die parallel zum ersten linienförmigen Energieeintrag verlaufen. Dabei ist es lediglich der erste linienförmige Energieeintrag, welcher an der Bildung der Kontur beteiligt ist, da der Rand des durch diesen Energieeintrag gesinterten Materials die Kontur des betreffenden Querschnitts definiert. Allerdings ist es vorteilhaft, wenn die weiteren linienförmigen Energieeinträge parallel zu diesem ersten linienförmigen Energieeintrag verlaufen, weil dann die aufzuschmelzende Querschnittsfläche mit einer vergleichsweise einfachen Anordnung der linienförmigen Energieeinträge ausgefüllt werden kann. Außerdem kann sich ein paralleles Anordnen der linienförmigen Energieeinträge positiv auf die im Gefüge auftretenden Spannungen auswirken. Alternativ ist es natürlich auch möglich, dass der erste linienförmige Energieeintrag sozusagen die Umrisslinie des Querschnitts bildet und das Innere des Querschnitts nach beliebigen anderen Mustern ausgefüllt wird. Hierbei stoßen die Enden der linienförmigen Energieeinträge vorteilhaft allerdings nicht an die Kontur des zu bildenden Querschnitts an, sondern an die durch den ersten linienförmigen Energieeintrag gebildeten Umriss, so dass die Oberflächengüte durch diesen Umriss definiert ist.

Eine besondere Ausgestaltung der Erfindung wird erhalten, wenn mehrere Laserstrahlen gleichzeitig zum Einsatz kommen, die in Richtung der parallelen linienförmigen Energieeinträge gesehen, versetzt hintereinander angeordnet ist. So entsteht eine Kaskade von Laserstrahlen, mit der in vergleichsweise kurzer Zeit ein vergleichsweise breiter an die Kontur des betreffenden Querschnitts sich anschließender Bereich der Querschnittsfläche aufgeschmolzen werden kann. Der Abstand der Laserstrahlen quer zur Ausrichtung der Linien der Energieeinträge entspricht gerade der Breite der durch die Laserstrahlen erzeugten Schmelzbäder. Der Abstand der Laser gesehen in Richtung der Linien der Energieeinträge kann so gewählt werden, dass eine Abkühlung des jeweils gesinterten Materials auf die geforderte Temperatur gewährleistet ist, bevor der folgende Laserstrahl an der betreffenden Stelle vorbeigeführt wird. Die geforderte Temperatur des gesinterten Materials ergibt sich aus den Gegebenheiten des einzelnen Anwendungsfalles und wird in erster Linie dadurch bestimmt, dass die durch die lokale Erwärmung des Werkstücks entstehenden Eigenspannungen nicht zu groß werden dürfen.

Besonders vorteilhaft ist es, wenn die Oberfläche des Pulverbettes dadurch hergestellt wird, dass ein Pulververteiler um eine Drehachse gedreht wird, die im Inneren des ringförmig geschlossenen Querschnitts und senkrecht zur Oberfläche des Pulverbettes liegt. Eine solche Anordnung des Pulververteilers ist vorteilhaft nur möglich, wenn ein ringförmig geschlossener Querschnitt hergestellt wird. Dadurch, dass das Pulver im Inneren des ringförmig geschlossenen Querschnitts nicht verfestigt werden muss, ist es möglich, den Pulverförderer mit seiner Drehachse innerhalb dieses inneren, nicht zu verfestigenden Teils des Pulvers anzuordnen. Nun kann sich der Pulververteiler um seine Drehachse drehen und überstreicht damit das Pulverbett mehr oder weniger im rechten Winkel zum ringförmigen Verlauf des geschlossenen Querschnitts. Hierdurch ist eine effektive Pulververteilung möglich, insbesondere kann sie auch kontinuierlich erfolgen, wobei die Verfestigung des Pulverbettes durch den Laserstrahl jeweils hinter den Pulververteiler erfolgt. Der Pulververteiler besteht vorteilhaft aus einer Dosierungseinheit, die beispielsweise einen schlitzförmigen Ausgang für das zu verteilende Pulver aufweist und einer Rakel, welche eine ebene Oberfläche des Pulverbettes gewährleistet, indem diese das dosierte Pulver überstreicht.

Auch ist es vorteilhaft, wenn das Werkstück kontinuierlich abgesenkt wird und der Pulververteiler sich kontinuierlich dreht, derart, dass nach einer vollen Umdrehung des Pulververteilers das Werkstück genau um eine Lagendicke abgesenkt wurde. Hierdurch wird vorteilhaft ein kontinuierlicher Ablauf des Lasersinterns möglich. Der Laserstrahl muss nicht zwecks Aufbringung einer neuen Lage Pulvers abgeschaltet werden, so dass vorteilhaft die Prozesszeiten des erfindungsgemäßen Verfahrens verkürzt werden können. Es ist bei der Ausführung des Verfahrens lediglich sicherzustellen, dass bei der kontinuierlichen Herstellung immer dort, wo der Pulververteiler das Pulverbett überstreicht, bereits der gesamte Teil des Querschnitts durch den Laserstrahl verfestigt wurde. Dabei bekommt das auszubildende Bauteil genau genommen keinen lagenförmigen Aufbau, sondern es entsteht eine einzige wendelförmige aufeinander aufbauende Lage.

Die oben angegebene Aufgabe wird weiterhin durch eine Anlage zum selektiven Lasersintern nach Anspruch 7 dadurch gelöst, dass der Pulververteiler drehbar um eine zumindest im wesentlichen senkrechte Drehachse gehalten ist und mit einem Antrieb gekoppelt ist, der den Pulververteiler in Drehungen um diese Drehachse versetzen kann. Damit liegt bei der erfindungsgemäßen Anlage ein Pulververteiler vor, mit dem das vorher beschriebene Verfahren vorteilhaft auf einfache Weise durchgeführt werden kann. Der Pulververteiler wird dabei derart im Pulverbett platziert, dass das Bauteil mit einem geschlossenen Querschnitt derart hergestellt werden kann, dass das durch den geschlossenen Querschnitt eingeschlossene Innere von der Drehachse des Pulververteilers durchlaufen wird. Bei einer Drehung des Pulververteilers kann nämlich im Bereich der Drehachse keine zuverlässige Pulverzuführung und Erzeugung einer ebenen Oberfläche des Pulverbetts erfolgen. Dafür lässt sich aber im Bereich des herzustellenden Querschnitts eine vergleichsweise effiziente Pulverzuführung realisieren, indem diese gleichzeitig mit einer Behandlung durch den Laserstrahl in Bereichen des geschlossenen Querschnitts erfolgt, wo gerade keine Pulverzuführung erforderlich ist. Die damit verbundenen Vorteile wurden bereits vorstehend im Zusammenhang mit der Erläuterung des erfindungsgemäßen Verfahrens beschrieben.

Erfindungsgemäß ist vorgesehen, dass der Pulververteiler eine Dosierungsvorrichtung und eine in Drehrichtung gesehen dahinter angeordnete Rakel aufweist. Die Pulverzuführung erfolgt über die Dosiervorrichtung, wobei diese die Herstellung einer ebenen Oberfläche des Pulverbettes nicht in genügender Weise gewährleistet. Die Rakel wird anschließend über das frisch dosierte Pulvermaterial geführt und vergleichmäßigt die Oberfläche des Pulverbettes, wobei überschüssiges Pulvermaterial aus dem Pulverbett entfernt wird. Vorteilhaft lassen sich damit besonders glatte Oberflächen des Pulverbettes erzeugen.

Eine weitere Ausgestaltung der Erfindung sieht vor, dass eine Steuervorrichtung vorgesehen ist, die eine kontinuierliche Drehung des Pulververteilers mit vorgegebener Drehzahl erlaubt. Eine solche Steuervorrichtung erleichtert vorteilhaft insbesondere einen kontinuierlichen Betrieb des Pulververteilers. Dieser kann sich mit einer bestimmten Drehzahl drehen, während gleichzeitig eine Behandlung der bereits ausgebildeten Oberfläche des Pulverbettes mittels des Laserstrahls erfolgt. Die Steuervorrichtung stellt sicher, dass die Stellung des Pulververteilers während der Behandlung durch den Laser bekannt ist, so dass ausgeschlossen werden kann, dass der Laserstrahl den Pulververteiler verletzt. Hierdurch lässt sich daher das Fertigungsverfahren vorteilhaft sehr effizient durchführen.

Gemäß einer besonderen Ausgestaltung der Erfindung ist vorgesehen, dass die Steuervorrichtung die Drehzahl des Pulververteilers mit einer Absenkgeschwindigkeit einer kontinuierlichen Absenkung des Trägers synchronisieren kann. Hierzu muss auch eine Ansteuerung der Absenkeinrichtung, also des Antriebs für das Absenken, durch die Steuervorrichtung ansteuerbar sein. Außerdem ist es vorteilhaft, dass für die Synchronisierung der Drehzahl des Pulververteilers und der Absenkgeschwindigkeit zumindest eine dieser beiden Parameter durch die Steuervorrichtung einstellbar ist. Unter einer Synchronisierung im Sinne der Erfindung ist zu verstehen, dass zwischen der Absenkgeschwindigkeit des Trägers und der Drehzahl des Pulververteilers ein bestimmtes Verhältnis eingestellt und eingehalten werden kann. Dies ermöglicht ein Betriebsregime, welches vorstehend bereits erläutert worden ist, nämlich dass eine Absenkung des Trägers gleichzeitig mit einer Drehung des Pulververteilers erfolgt, wobei eine volle Umdrehung des Pulververteilers zu einer Absenkung des Trägers genau um eine Lagendicke führt. Mittels der Steuervorrichtung kann dann eine bestimmte Lagendicke pro Umdrehung eingestellt werden. Außerdem ist die Drehzahl des Pulververteilers so einzustellen, dass eine vollständige Bearbeitung der Querschnittsfläche des herzustellenden Werkstücks innerhalb einer Umdrehung ermöglicht wird. Die Drehzahl hängt also insbesondere von dem Flächeninhalt der Querschnittsfläche ab sowie von der Anzahl der verwendeten Laserstrahlen.

Weitere Einzelheiten der Erfindung werden nachfolgend anhand der Zeichnung beschrieben. Gleiche oder sich entsprechende Zeichnungselemente sind in den einzelnen Figuren jeweils mit den gleichen Bezugszeichen versehen und werden nur insoweit mehrfach erläutert, wie sich Unterschiede zwischen den einzelnen Figuren ergeben. Es zeigen:
- Figur 1: schematisch eine räumliche Ansicht eines Ausführungsbeispiels der erfindungsgemäßen Anlage zum Lasersintern,
- Figur 2 - 4: eine räumliche Darstellung verschiedener Stadien eines Ausführungsbeispiels des erfindungsgemäßen Verfahrens zum selektiven Lasersintern, angewendet an der Brenneröffnung eines Brenners für Gasturbinen und
- Figur 5 - 7: schematisch verschieden Querschnittsflächen von herzustellenden Bauteilen mit gekrümmten Konturen mit linienförmigen Energieeinträgen gemäß weiteren Ausführungsbeispielen des erfindungsgemäßen Verfahrens (Figuren 5 und 7) bzw. gemäß dem Stand der Technik (Figur 6).

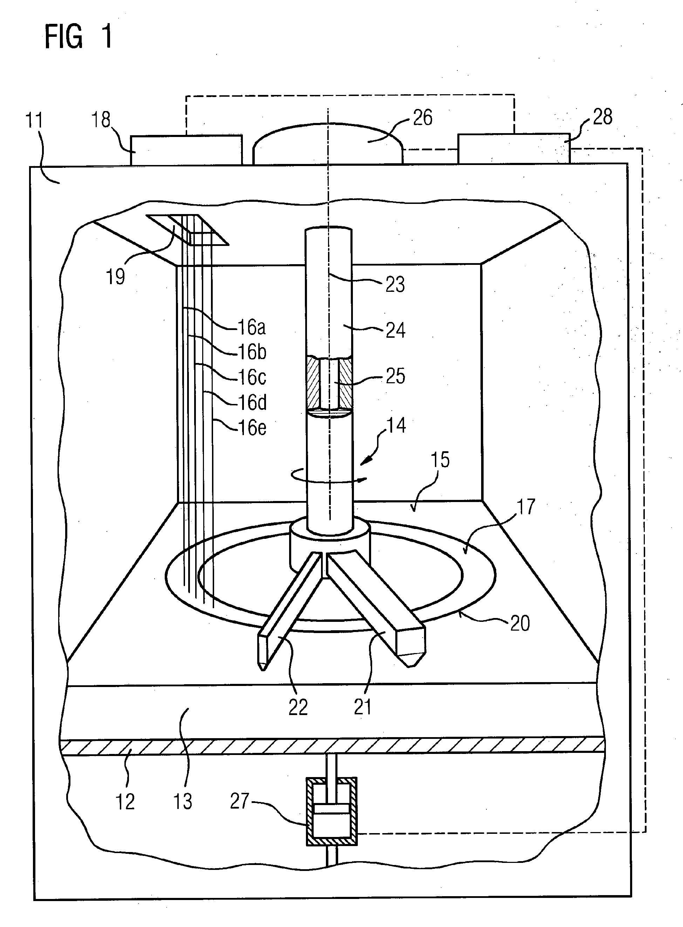

Eine Anlage zum selektiven Lasersintern gemäß Figur 1 weist eine Prozesskammer 11 auf, in der ein Träger 12 für ein nicht näher dargestelltes Werkstück vorgesehen ist. Auf dem Träger 12 wird ein Pulverbett 13 mit einem Pulververteiler 14 erzeugt, welches eine Oberfläche 15 zur Verfügung stellt, die mit Laserstrahlen 16a, 16b, 16c, 16d, 16e bestrahlt werden kann. Diese Bestrahlung erfolgt im Bereich einer auszubildenden Querschnittsfläche 17 des herzustellenden Bauteils, welches sich im Pulverbett 13 befindet und daher in Figur 1 nicht zu erkennen ist. Die Laserstrahlen werden durch einen in einer Lasereinheit 18 untergebrachten und nicht näher dargestellten Laser erzeugt und über ein Fenster 19 in die Prozesskammer 11 eingeleitet. In der Lasereinheit 18 sind außerdem nicht näher dargestellte Spiegelmechanismen zur Umlenkung der Laserstrahlen vorgesehen, wobei mit Hilfe dieser die Laserstrahlen über die Oberfläche 15 des Pulverbettes 13 geführt werden können. Dabei entsteht jeweils die Querschnittsfläche 17 in der Oberfläche 15 des Pulverbettes 13, die eine gekrümmte Kontur 20 aufweist.

Das Pulver wird über den Pulververteiler 14 zugeführt. Dieser weist eine Dosiervorrichtung 21 mit einem nicht näher dargestellten, nach unten gerichteten Dosierschlitz und eine Rakel 22 auf. Die Dosiervorrichtung wird um eine Drehachse 23 in Richtung des angedeuteten Pfeils gedreht, so dass die Rakel 22 der Dosiervorrichtung 21 folgt. Damit können Unebenheiten, die bei einer unzureichend genauen Dosierung entstehen, durch die Rakel 22 eingeebnet werden. Dabei entsteht die Oberfläche 15 des Pulverbettes 13, die anschließend bearbeitet werden kann. Die Dosiervorrichtung 21 und die Rakel 22 sind an einer drehbar in der Drehachse 23 gelagerten Haltestange 24 befestigt. Diese ist, wie im teilweise aufgebrochenen Bereich dargestellt, im Inneren mit einer Zuführleitung 25 für das Pulver versehen. Außen auf der Prozesskammer 11 ist außerdem ein Antrieb 26 vorgesehen, der den Pulververteiler in Drehungen versetzen kann. Dieser besteht aus einem Elektromotor, der nicht näher dargestellt ist. Optional kann auch vorgesehen werden, dass die Haltestange 24 axial bewegt werden kann, um übereinander liegende Lagen des Pulverbettes herstellen zu können.

In der Ausführung gemäß Figur 1 wird die Herstellung der aufeinander folgenden Lagen des Pulverbettes jedoch durch einen Hubantrieb 27 für den Träger 12 ausgebildet, der lediglich schematisch als Hydraulikzylinder dargestellt ist. Hiermit kann der Träger 12 stufenweise abgesenkt werden, um immer neue Lagen im Pulverbett erzeugen zu können. Dieses wird dann immer tiefer, wobei die aufeinander folgenden Querschnitte 17 des herzustellenden Werkstückes entstehen.

In Figur 1 dargestellt ist weiterhin eine Steuerung 28, welche mehrere Aufgaben hat. Es sind mit gestrichelten Linien Steuerleitungen angedeutet, wobei deutlich wird, dass die Steuervorrichtung 28 sowohl die Drehung des Antriebs 26 für den Pulververteiler 14 als auch den Hubantrieb 27 für den Träger 12 die Lasereinheit 18 ansteuert. Damit können die Prozessvorrichtungen derart synchronisiert werden, dass gleichzeitig eine Zuführung von Pulver und eine Laserbehandlung möglich wird.

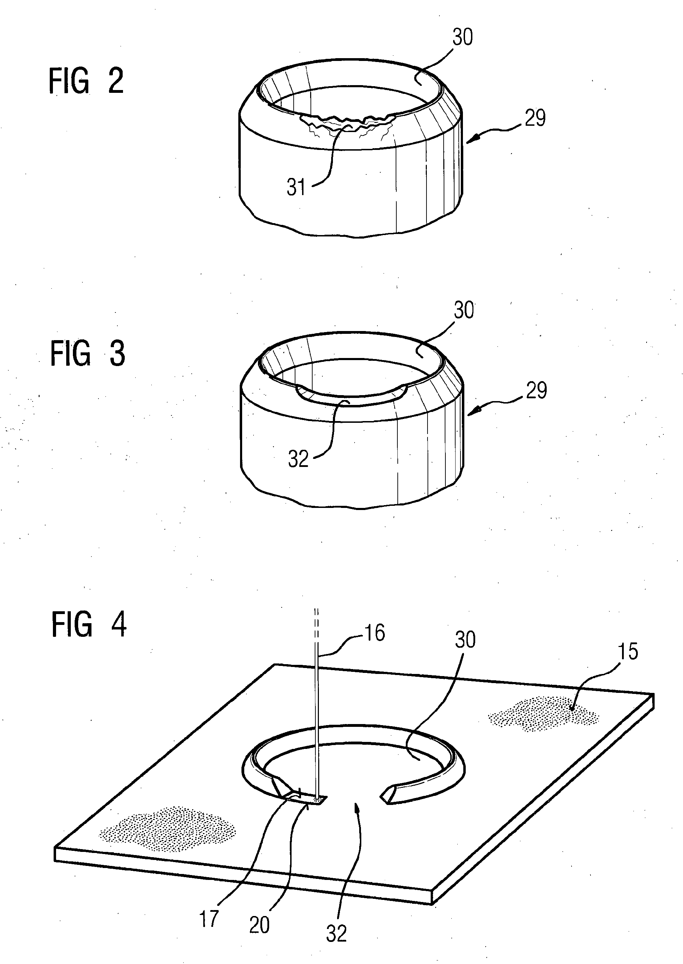

Gemäß den Figuren 2 bis 4 wird als Werkstück 29 ein Brenner für Gasturbinen repariert, dessen Brenneröffnung 30 aufgrund der auftretenden thermischen Beanspruchungen während des Betriebs einen Schaden 31 erlitten hat (vgl. Figur 2). Wie Figur 3 zu entnehmen ist, wird im Bereich des Schadens 31 das Material der Brenneröffnung 30 entfernt, so dass eine Ausnehmung 32 entsteht, die durch neues Material aufgefüllt werden kann. Alternativ (nicht dargestellt) kann auch der gesamte die Brenneröffnung 30 bildende Ring entfernt werden, wenn der Rest dieses Rings bereits ebenfalls in seiner Gefügeintegrität soweit angegriffen ist, dass die Ausbildung von Schäden auch in diesen Bereichen bereits absehbar ist.

Die Auffüllung der Ausnehmung 32 mit Material erfolgt erfindungsgemäß mit dem Lasersintern. Dies ist in Figur 4 dargestellt. Es ist ausschnittsweise ein Teil der Oberfläche 15 des Pulverbettes zu erkennen, wobei dieses im Bereich der Ausnehmung 32 durch den Laserstrahl 16 verfestigt wird, wodurch in diesem Bereich die Querschnittsfläche 17 des zu bildenden Teils des Bauteils 29, bestehend aus der Ausfüllung der Ausnehmung 32, entsteht. Zu erkennen ist weiterhin, dass der Rest des die Brenneröffnung 30 bildenden Rings aus der Oberfläche 15 des Pulverbetts herausragt, da nur im Bereich der Ausnehmung 32 Material ergänzt werden muss.

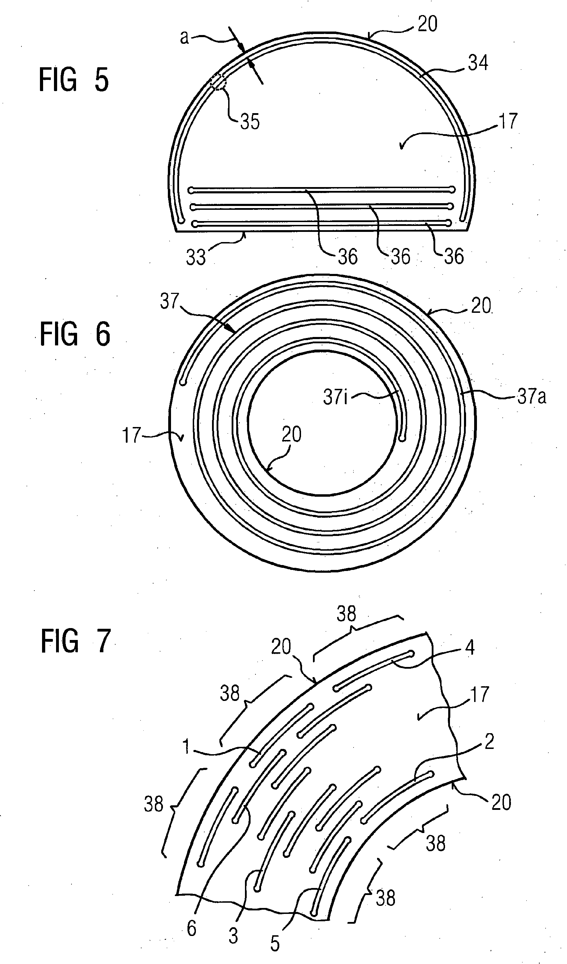

In den Figuren 5 bis 7 sind verschiedene Querschnittsflächen 17 von zu erzeugenden Bauteilen schematisch dargestellt. Der Figur 5 lässt sich beispielsweise entnehmen, dass ein Querschnitt nur teilweise eine gekrümmte Kontur 20 aufweisen kann, wobei gleichzeitig in dem Querschnitt ein gerader Abschnitt 33 vorhanden ist. Um die gekrümmte Kontur 20 mit hoher Oberflächengüte herstellen zu können, wird ein gekrümmter linienförmiger Energieeintrag 34 vorgesehen, der mit einem dichten Abstand der Kontur 20 folgt. Der Abstand a des linienförmigen Energieeintrags 34 von der Kontur 20 beträgt gerade die halbe Schmelzbadbreite (bzw. Wärmeeinflusszone für das Sintern, im Folgenden aber kurz als Schmelzbadbreite bezeichnet, auch wenn es nicht zwangläufig zur Ausbildung eines Schmelzbades kommt), die der Laser (nicht dargestellt) erzeugt. Ein Schmelzbad 35 ist exemplarisch angedeutet, wobei deutlich wird, dass dieses mit seinem Rand genau mit der Kontur 20 abschließt. Außerdem sind weitere linienförmige Energieeinträge 36 dargestellt, die entlang des geraden Abschnittes 33 verlaufen und jeweils direkt am gekrümmten linienförmigen Energieeintrag 34 enden. Auf diese Weise kann die gesamte Querschnittsfläche mit Energieeinträgen ausgefüllt werden, wobei diese der Übersichtlichkeit halber nicht alle dargestellt sind.

In Figur 6 ist eine kreisringförmige Querschnittsfläche 17 dargestellt, wie diese beispielsweise durch eine Brenneröffnung gemäß Figur 2 gebildet sein könnte. Dieser weist sowohl im Inneren wie auch im Äußeren eine gekrümmte Kontur in Form eines Kreises auf. Gemäß Figur 6 wird die Querschnittsfläche 17 durch einen einzigen linienförmigen Energieeintrag 37 ausgefüllt, er spiralförmig von außen nach innen verläuft. Dabei tragen eine äußere Spiralwindung 37a und eine innere Spiralwindung 37i des Energieeintrags 37 zur Ausbildung der beiden kreisförmigen Konturen in der erfindungsgemäßen Weise bei.

In Figur 7 ist ein Segment einer anderen zu bildenden Querschnittsfläche 17 in Form eines Kreisrings zu erkennen. Hier werden mehrere linienförmige Energieeinträge verwendet, wobei diese so kurz sind, dass sie u. a. jeweils nur Teilabschnitte 38 der Kontur 20 bilden. Die Idee hierbei liegt darin, dass die linienförmigen Energieeinträge in einer festgelegten Reihenfolge vorgenommen werden, wobei hierbei beachtet wird, dass aufeinander folgende Energieeinträge nicht zu nah beieinander liegen, so dass eine übermäßige lokale Erwärmung des sich bildenden Werkstückes vermieden wird. Betrachtet man einen bestimmten Energieeintrag 1 als ersten Energieeintrag, so wird der nächste Energieeintrag 2 beispielsweise auf der gegenüberliegenden Seite des Querschnitts vorgenommen. Anschließend wird der nächste Energieeintrag 3 in der Mitte des ringförmigen Querschnitts vorgenommen. Erst dann wird der nächste Energieeintrag 4 vorgenommen, der sich an den ersten Energieeintrag 1 anschließt. Dann kann der nächste Energieeintrag 5, sich anschließend an den Energieeintrag 2 vorgenommen werden. Nun wird der nächste Energieeintrag 6 vorgenommen, der teilweise sogar parallel zum ersten Energieeintrag 1 läuft, wobei letzterer allerdings inzwischen weitgehend abgekühlt ist. Auf diese Weise kann die Querschnittsfläche mit verschiedenen Energieeinträgen ausgefüllt werden, bis das gesamte Material verfestigt ist. In Figur 7 sind der besseren Übersichtlichkeit halber nur einige Energieeinträge dargestellt.

## Patentansprüche

1. Verfahren zum selektiven Lasersintern, bei dem ein Werkstück (29) lagenweise durch Bestrahlung eines aus dem Material des Werkstücks (29) bestehenden Pulverbettes (13) durch mehrere linienförmigen Energieeinträge eines Laserstrahls (16) hergestellt wird, wobei das Werkstück (29) im durch die Oberfläche des Pulverbettes (13) definierten Querschnitt zumindest teilweise eine gekrümmte Kontur (20) aufweist und der Laserstrahl (16) zumindest während eines ersten linienförmigen Energieeintrags der gekrümmten Kontur (20) folgend derart geführt wird, dass die Kontur durch das gesinterte Material stufenlos nachgebildet wird,
**dadurch gekennzeichnet,**
**dass** das Werkstück (29) einen durch die Oberfläche definierten, ringförmig geschlossenen Querschnitt, insbesondere einen kreisringförmigen Querschnitt aufweist und durch den ersten linienförmigen Energieeintrag nur ein erster Teilabschnitt (38) der gekrümmten Kontur (20) ausgebildet wird und an diesen Teilabschnitt (38) angrenzende Teilabschnitte (38) der gekrümmten Kontur durch weitere linienförmige Energieeinträge erst dann ausgebildet werden, wenn das Material des ersten Teilabschnittes (38) unter eine geforderte Temperatur abgekühlt ist.

2. Verfahren nach Anspruch 1,
**dadurch gekennzeichnet,**
**dass** das Werkstück (29) ein Brenner ist, bei dem die Brenneröffnung (30) hergestellt oder repariert wird.

3. Verfahren nach einem der Ansprüche 1 bis 2,
**dadurch gekennzeichnet,**
**dass** die weiteren linienförmigen Energieeinträge parallel zum ersten linienförmigen Energieeintrag verlaufen.

4. Verfahren nach Anspruch 3,
**dadurch gekennzeichnet,**
**dass** mehrere Laserstrahlen (16a, 16b, 16c, 16d, 16e) gleichzeitig zum Einsatz kommen, die in Richtung der parallelen linienförmigen Energieeinträge gesehen versetzt hintereinander angeordnet sind.

5. Verfahren nach Anspruch 2,
**dadurch gekennzeichnet,**
**dass** die Oberfläche des Pulverbettes (13) dadurch hergestellt wird, dass ein Pulververteiler (14) um eine Drehachse (23) gedreht wird, die im Inneren des ringförmig geschlossenen Querschnitts und senkrecht zur Oberfläche des Pulverbettes liegt.

6. Verfahren nach Anspruch 5,
**dadurch gekennzeichnet,**
**dass** das Werkstück (29) kontinuierlich abgesenkt wird und der Pulververteiler (14) sich kontinuierlich dreht, derart, dass nach einer vollen Umdrehung des Pulververteilers (14) das Werkstück (29) genau um eine Lagendicke abgesenkt wurde.

7. Anlage zum selektiven Lasersintern mit einer Prozesskammer (11), in der ein Träger (12) für ein herzustellendes Werkstück (29) und ein Pulververteiler (14) zur Erzeugung eines Pulverbettes (13) auf dem Träger (12) vorgesehen ist, wobei der Pulververteiler (14) drehbar um eine zumindest im wesentlichen senkrechte Drehachse (23) gehalten ist und mit einem Antrieb (26) gekoppelt ist, der den Pulververteiler (14) in Drehungen um diese Drehachse (23) versetzen kann und der Pulververteiler (14) eine Dosiervorrichtung (21) und eine in Drehrichtung gesehen dahinter angeordnete Rakel (22) aufweist, wobei die Dosiervorrichtung (21) und die Rakel (22) mit ihrem Ende an einer drehbar in der Drehachse (23) gelagerten Haltestange (24) befestigt sind,
**dadurch gekennzeichnet,**
**dass** die Haltestange im Inneren mit einer Zuführleitung (25) für Pulver versehen ist.

8. Anlage nach Anspruch 7,
**dadurch gekennzeichnet,**
**dass** eine Steuervorrichtung (28) vorgesehen ist, die eine kontinuierliche Drehung des Pulververteilers (14) mit vorgegebener Drehzahl erlaubt.

9. Anlage nach Anspruch 7,
**dadurch gekennzeichnet,**
**dass** die Steuervorrichtung (28) die Drehzahl des Pulververteilers (14) mit einer Absenkgeschwindigkeit einer kontinuierlichen Absenkung des Trägers (12) synchronisieren kann.

## Claims

1. Method for selective laser sintering, in which a workpiece (29) is produced layer by layer by irradiating a powder bed (13) consisting of the material of the workpiece (29) by a number of linear applications of energy of a laser beam (16), wherein the workpiece (29) at least partially has a curved contour (20) in the cross section defined by the surface of the powder bed (13) and, at least during a first linear application of energy, the laser beam (16) is guided so as to follow the curved contour (20) in such a way that the contour is continuously replicated by the sintered material, **characterized in that** the workpiece (29) has an annularly closed cross section, in particular a circular-annular cross section, defined by the surface, and only a first sub-portion (38) of the curved contour (20) is formed by the first linear application of energy, and sub-portions (38) of the curved contour that are adjacent this sub-portion (38) are only formed by further linear applications of energy when the material of the first sub-portion (38) has cooled down below a required temperature.

2. Method according to Claim 1, **characterized in that** the workpiece (29) is a burner in which the burner opening (30) is being produced or repaired.

3. Method according to either of Claims 1 and 2, **characterized in that** the further linear applications of energy run parallel to the first linear application of energy.

4. Method according to Claim 3, **characterized in that** a number of laser beams (16a, 16b, 16c, 16d, 16e) that are arranged offset one behind the other, as seen in the direction of the parallel linear applications of energy, are used simultaneously.

5. Method according to Claim 2, **characterized in that** the surface of the powder bed (13) is produced by a powder distributor (14) being rotated about an axis of rotation (23) that lies inside the annularly closed cross section and perpendicularly in relation to the surface of the powder bed.

6. Method according to Claim 5, **characterized in that** the workpiece (29) is continuously lowered and the powder distributor (14) is continuously rotated in such a way that, after a full revolution of the powder distributor (14), the workpiece (29) has been lowered by precisely one layer thickness.

7. System for selective laser sintering with a process chamber (11), in which a support (12) for a workpiece (29) to be produced and a powder distributor (14) for creating a powder bed (13) on the support (12) are provided, wherein the powder distributor (14) is held rotatably about an at least substantially perpendicular axis of rotation (23) and is coupled to a drive (26), which can make the powder distributor (14) perform rotations about this axis of rotation (23), and the powder distributor (14) has a metering device (21) and a doctor blade (22) arranged behind the latter, as seen in the direction of rotation, wherein the metering device (21) and the doctor blade (22) are attached by their ends to a holding rod (24) that is mounted rotatably in the axis of rotation (23), **characterized in that** the holding rod is provided inside with a feed line (25) for powder.

8. System according to Claim 7, **characterized in that** a control device (28) that allows a continuous rotation of the powder distributor (14) at a given rotational speed is provided.

9. System according to Claim 7, **characterized in that** the control device (28) can synchronize the rotational speed of the powder distributor (14) with a lowering speed of a continuous lowering of the support (12).

## Revendications

1. Procédé de frittage laser sélectif, dans lequel on produit une pièce couche par couche en exposant un lit (13) de poudre en la matière de la pièce (29) à plusieurs apports d'énergie linéaires d'un faisceau (16) laser, la pièce (29) ayant, par la surface de la section transversale définie par le lit (13) de poudre, au moins en partie un contour (20) incurvé, et le faisceau (16) laser étant, au moins pendant un premier apport d'énergie linéaire, guidé en suivant le contour (20) incurvé de manière à reproduire en continu le contour par la matière frittée,
**caractérisé en ce que**
la pièce (29) a une section transversale fermée annulairement définie par la surface, notamment une section transversale en forme d'anneau de cercle, et par le premier apport d'énergie linéaire il n'est formé qu'un premier tronçon (38) partiel du contour (20) incurvé et des tronçons (38) partiels voisins de ce tronçon (38) partiel du contour incurvé ne sont formés par d'autres apports d'énergie linéaires que si la matière du premier tronçon (18) partiel est refroidie en dessous d'une température exigée.

2. Procédé suivant la revendication 1, **caractérisé en ce que** la pièce (29) est un brûleur dans lequel on produit ou on répare l'ouverture (30) du brûleur.

3. Procédé suivant l'une des revendications 1 à 2, **caractérisé en ce que**
les autres apports d'énergie linéaires s'étendent parallèlement au premier apport d'énergie linéaire.

4. Procédé suivant la revendications 3,
**caractérisé en ce que**
l'on utilise plusieurs faisceau (16a, 16b, 16c, 16d, 16^{e}) laser en même temps qui, considéré dans la direction des apports d'énergie linéaires parallèles, sont décalés les uns derrière les autres.

5. Procédé suivant la revendications 2,
**caractérisé en ce que**
l'on produit la surface du lit (13) de poudre en faisant tourner un répartiteur (14) de poudre autour d'un axe (23) de rotation, qui se trouve à l'intérieur de la section transversale fermée annulaire et qui est perpendiculaire à la surface du lit de poudre.

6. Procédé suivant la revendications 5,
**caractérisé en ce que**
l'on abaisse continuellement la pièce (29) et le répartiteur (14) de poudre tourne continuellement de manière qu'après un tour complet du répartiteur (14) de poudre la pièce (29) ait été abaissée exactement d'une épaisseur de couche.

7. Installation de frittage laser sélectif, comprenant une chambre (11) de processus, dans laquelle il est prévu un support (12) d'une pièce (29) à produire et un répartiteur (14) de poudre pour la production d'un lit (13) de poudre sur le support (12), le répartiteur (14) étant maintenu tournant autour d'un axe (23) de rotation au moins sensiblement vertical et étant relié à un entraînement (26) qui peut mettre le répartiteur (14) de poudre en rotation autour de cet axe (23) de rotation et le répartiteur (14) de poudre a un dispositif (21) de dosage et une racle (22) disposée derrière, considérée dans le sens de rotation, le dispositif (21) de dosage et la racle (22) étant fixée par son extrémité à une barre (24) de maintien montée tournante dans l'axe (23) de rotation,
**caractérisée en ce que**
la barre de maintien est pourvue à l'intérieur d'un conduit (25) d'apport de poudre.

8. Installation suivant la revendication 7,
**caractérisée en ce que**
il est prévu un dispositif (28) de commande qui permet une rotation en continu du répartiteur (14) de poudre à une vitesse de rotation donnée à l'avance.

9. Installation suivant la revendication 7,
**caractérisée en ce que**
le dispositif (28) de commande peut synchroniser la vitesse de rotation du répartiteur (14) de poudre à la vitesse d'un abaissement continu du support (12).
